(19) Europäisches Patentamt
European Patent Office
Office européen des brevets

(11) **EP 3 859 405 A1**

(12) **EUROPEAN PATENT APPLICATION**

(43) Date of publication:
**04.08.2021 Bulletin 2021/31**

(51) Int Cl.:
***G01V 1/30*** *(2006.01)*

(21) Application number: **20382049.3**

(22) Date of filing: **28.01.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Repsol Exploración, S.A.**
**28045 Madrid (ES)**

(72) Inventors:
• OLAYA, José
**The Woodlands, TX 77381 (US)**
• LARRAZÁBAL, Germán
**The Woodlands, TX 77381 (US)**

(74) Representative: **ABG Intellectual Property Law, S.L.**
**Avenida de Burgos, 16D**
**Edificio Euromor**
**28036 Madrid (ES)**

(54) **COMPUTER-IMPLEMENTED METHOD FOR DETERMINING A VELOCITY IMAGE OF A DOMAIN OF THE SUBSURFACE STRUCTURAL GEOLOGY IN AN OIL AND GAS RESERVOIR**

(57)     The present invention is a computer-implemented method for determining a velocity image of a domain of the subsurface structural geology in an oil and gas reservoir comprising an iterative method that combines a migration step and a population step propagating values from regions of the image wherein the velocity is known, or the velocity is according to information being deemed as correct. In this field of the technology this kind of data is also known as hard data. The iterative process uses a seismic image in depth of an initial guess as initial velocity model in a conjunction with tensor properties to generate a new velocity model based on criteria of minimum residual moveout on a specific point(s) or well control location(s). At these locations data information (velocity) is considered as well-known a-prior information to be propagated around the neighborhood guided taking into account the geological structure.

FIG. 3

**Description**

**FIELD OF THE INVENTION**

The present invention is a computer-implemented method for determining a velocity image of a domain of the subsurface structural geology in an oil and gas reservoir comprising an iterative method that combines a migration step and a population step propagating values from regions of the image wherein the velocity is known or the velocity is according to information being deemed as correct. In this field of the technology this kind of data is also known as hard data.

The iterative process uses a seismic image in depth of an initial guess as initial velocity model in a conjunction with tensor properties to generate a new velocity model based on criteria of minimum residual moveout on a specific point(s) or well control location(s) on the common image point gathers CIP. At these locations data information (velocity) is considered as well-known a-prior information to be propagated around the neighborhood guided taking into account the geological structure provided by structure tensors s computed from seismic image.

**PRIOR ART**

In Oil & Gas industry, the reflection seismology is the most effective geophysical method to estimate the properties of the Earth's subsurface from reflected seismic waves.

Seismic waves are generated by a controlled seismic source: dynamite, an air gun or a seismic vibrator. The seismic waves travel from the surface trough the earth bouncing at subsurface geologic interfaces and then they return to the surface being recorded in geophones that are installed on the ground.

The reflected energy recorded in time by the geophones, the shot gathers, is processed applying signal processing techniques. Among usual data comprised in the processed signal is the amplitude of the waves registered in the geophones.

Some of the signal processing steps carried out on the registered data are static corrections and signal denoising aimed to keep only primary reflected energy. Then, seismic data is migrated to produce a seismic image that represents the subsurface structure geology in depth.

The migration procedure requires a velocity image, said velocity image being a discretization of a velocity field of a certain domain of the earth, in order to generate an accurate image of the subsurface.

The velocity model building for depth imaging by using a migration procedure is a very CPU demanding process as it departures from a first initial velocity image and generates a sequence of velocity images by an iterative process until convergence.

A migration iterator determines velocity correction values for updating the velocity image in each iteration and generates information produced during migration that is used as input in the next migration iteration.

According to the prior art, several techniques are currently used to estimate velocities. The most popular one is automatic reflection tomography. This technique needs an initial velocity model, residual error estimations from pre stack common image gathers and dip field estimations from the post stack image carried out over the initial model.

The tomography inversion takes residual errors in depth to compute velocity perturbations of the velocity field based on dip estimations. This methodology requires a very good signal/noise ratio to produce a reliable picking on the common image gathers as well as the dip field estimation.

This specific technique has being widely developed and used on Marine Seismic data, where signal to noise ratio is very high; however, in land data the signal/noise ratio on pre stack data is poor due to, near surface, some velocity anomalies due to seismic records are contaminated with surface waves and back scattering noise. As a result, the registered data generates a very complex wave field with a bad and/or inconsistent picking on pre stack data.

These simulations misrepresent kinematics of the reflection tomography so inversion convergence is unstable, producing a velocity model that does not conform to seismic image a misleading structure model of the true Earth.

In any case, migration method for generating a velocity image after convergence is a very expensive method from a computational point of view and, when the velocity field comprises complex structures such as those obtained when using land seismic data for Thrust Belt Systems, the iterative method may not converge to the solution.

The present invention is related to a method for velocity model building for pre-stack depth migration that reduces the computational cost of the velocity image generation and ensures the convergence. This method is suitable for Land Seismic Data for Thrust Belt Systems.

**DESCRIPTION OF THE INVENTION**

The present invention is a computer-implemented method for determining a velocity image of a domain of the subsurface structural geology in an oil and gas reservoir suitable for thrust belt environments. The method comprises:

- *inputting surface seismic data of an acoustic survey retrieved from the domain which comprises stacked acoustic amplitudes and the locations of acoustic source and the receivers;*
- *inputting an initial velocity field estimation on the domain and generating a velocity image by a Pre-Stack Depth migration process, the velocity image comprising pixels/voxels, wherein said pixels/voxels represent the velocity in a discretization of the domain;*
- *inputting velocity information at one or more locations of the domain considered as correct information or known information.*

The method according to a first aspect of the invention is an iterative method that provides a sequence of iterations departing from a first estimation of the velocity field named as initial velocity field estimation. Said initial velocity field estimation of the domain may be generated according to several embodiments such as:

i. a velocity image wherein all pixel/voxel values are constant with a predetermined velocity value;
ii. a velocity image with known data in certain pixel/voxel locations and the rest of the image without known data, said pixels/voxels without known data being propagated from known data;
iii. a velocity image according to a) or b) being iterated a pre-determined number of iterations by a Pre-Stack Depth Migration iterator.

If an iterative method is convergent, the velocity image obtained after the iterative process does not depend on the initial velocity field estimation (if no artifacts appears in the image). This is the case; a better initial velocity field estimation may reduce the number of iterations of the iterative process until reaching convergence.

The terms pixels/voxels refer to the minimum addressable element of an image. The term pixel applies to bi-dimensional images and is located at certain bi-dimensional coordinates of the discretized domain. The term voxel applies to three-dimensional images and is located at certain three-dimensional coordinates of the discretized domain.

This minimum addressable element of an image contains the value of a discretized scalar variable and therefore the term image is equivalent to a scalar field being discretized according to a Castesian discretization. As a result, a velocity image may be interpreted as a propagation velocity field being discretized on a certain domain. Once a color palette is chosen, the image may be graphically represented or manipulated as any other image.

The term domain should be interpreted as a region of a subsurface structural geology in an oil and gas reservoir field where the acoustic survey is being carried out and where the velocity of acoustic propagation will be determined.

Surface seismic acoustic data or just seismic acoustic data comprises at least stacked acoustic amplitudes of the recorded acoustic signals during the acoustic survey retrieved from the domain and, the locations of the acoustic source and the receivers.

The locations of the acoustic source and the receivers allow migrating data and checking if the migrated data show a flatness condition in the common image gathers points and therefore providing information about those parts of the velocity image that may be corrected in the inversion process.

The method also comprises:

- *defining a Pre-Stack Depth Migration module configured to iterate a predetermined number of iterations on a velocity image providing in each iteration a new velocity image with a correction of the velocity of the image;*
- *defining an error estimator module adapted to provide an error estimation of a velocity image;*

The first module is an implementation of any pre-stack depth migration module used in the prior art for iterating on a velocity image. The pre-stack depth migration module may iterate one or more iterations providing in each iteration a new velocity image corrected by adding increments of velocity values at one or more pixels of said velocity image.

The second module is an error estimator module allowing to determine convergence of the iterative method. A specific embodiment of the error estimator module simulates the propagation of a ray of the acoustic wave generated in the surface from the source; it is propagated throughout the earth and registered in one receiver on the surface. The simulation of the propagation using the velocity model and a propagation equation allows to determine in the common image gathers points if the migrated data fulfils the condition of receiving the energy from the same point within the domain and the need of further correcting the velocity image.

The method according to the first aspect of the invention iteratively carries out the following steps:

a) executing the Pre-Stack Depth Migration module iterating on the whole velocity image a pre-determined number N of iterations;
b) determining a set R of pixels/voxels of the velocity image corresponding to locations of the domain wherein the velocity field is considered as being correct or known information;
c) populating values of the pixels/voxels not being in the set R from the values of the pixels/voxels being in the set

*R, being said populating step dependent on the values of stacked acoustic amplitudes in the image domain;*

*until the error estimator module determines an error on the velocity image under a predetermined threshold value.*

The method combines one or more Pre-Stack Depth Migration iterations on the whole velocity image (I) and, further propagating velocity values from a set R of pixels/voxels wherein the velocity field is considered as being correct or known information to the rest of pixels/voxels on regions of the image with pixels/voxels not being in the set R.

The set R of pixels/voxels considered as being correct or known information are pixels that correspond to locations of the domain wherein the velocity values have been measured or have been considered as well-known information based on flatness of the gathers in the image domain which could be defined with no uncertainty. According to an embodiment, the set R of pixels/voxels with locations wherein the velocity values are known are those defining a well where the velocity values are hard data measured in situ.

The rest of pixels/voxels are populated from the values of the pixels/voxels of the set R, propagating the values to the rest of the domain.

According to an embodiment, for each pixel/voxel $x_i$ of a region not being in the set R, the values of the set R populated to that pixel is the value of a pixel/voxel of the set R identified as the one satisfying that the travel time of an acoustic wave from $x_i$ to $x_k$ is minimum for all pixels/voxels $x_k$ of the set (R). The travel time between both pixels/voxels is estimated by a simulator implementing an acoustic propagator that takes into account the geological structure.

According to a preferred embodiment, the population process according to step c) is carried out for each pixel/voxel $x_i$ not being in the set R. The velocity value of the pixel/voxel $x_i$ is set to the velocity value of a pixel/voxel located at a location $x_k$ of the set R satisfying that the travel time of an acoustic wave from $x_i$ to $x_k$ is minimum for all pixels/voxels $x_k$ of the set R. According to this embodiment, the population process is dependent on the values of stacked acoustic amplitudes in the domain since the propagating path of the acoustic wave connecting point $x_i$ of the set R and point $x_k$ of the set of point not being in set R depends on the information of the acoustic propagation properties of the geological structure of the domain for determining de minimum travel time condition and, said information is provided by the stacked acoustic amplitudes in the domain.

According to a specific embodiment, the propagating path of the acoustic wave connecting point $x_i$ of the set R and point $x_k$ of the set of point not being in set R is based on the values of the diffusion tensor matrix defined as $D_{ij} = a_{i,j} \, a_{j,i}$ wherein "$a_{i,j}$" denotes derivative of $a_i$ with respect to coordinate $j$; being $a$ the stacked acoustic amplitude at the location of the pixel/voxel where $D(x)$ is being evaluated. Specifically, the direction of the path at each location of the path fullfil to be parallel to the eigen-vector associated to the largest eigen-value of $D(x)$. That is, known data is propagated around the neighborhood guided by a tensor operator computed from the stacked acoustic amplitudes.

According to a preferred embodiment, the set of pixels/voxels corresponding to those regions where the velocity image has been calculated according to step a), step b) or both and wherein the error estimator module determines that the velocity is under a pre-determined threshold value are merged into the set R of pixels/voxels.

The merging process of points not being in the set R to the set R reduces the number of pixels/voxels being populated, accelerating the convergence process and therefore reducing the computational cost of the iterative process.

Another embodiments will be disclosed in the detailed description of the invention.

## DESCRIPTION OF THE DRAWINGS

These and other features and advantages of the invention will be seen more clearly from the following detailed description of a preferred embodiment provided only by way of illustrative and non-limiting example in reference to the attached drawings.

Figure 1    This figure shows a data processing system for carrying out a method according to the invention.

Figure 2    This figure schematically shows a first embodiment of a first aspect of the invention wherein an acoustic survey is carried out on a domain located under the surface, data from the acoustic survey and data from two well-logs are used for generating an initial velocity image of said domain.

Figure 3    This figure schematically shows the same domain shown in figure 2 with the image representing the velocity field on said domain and the main elements of the iterative process for migrating acoustic data.

## DETAILED DESCRIPTION OF THE INVENTION

As will be appreciated by one skilled person in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including an object oriented programming language such as Java, Smalltalk, C++ or the like and conventional procedural programming languages, such as the "C" or FORTRAN programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to illustrations and/or diagrams of methods, apparatus (systems) and computer program products according to embodiments of the invention. It will be understood that each illustration can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

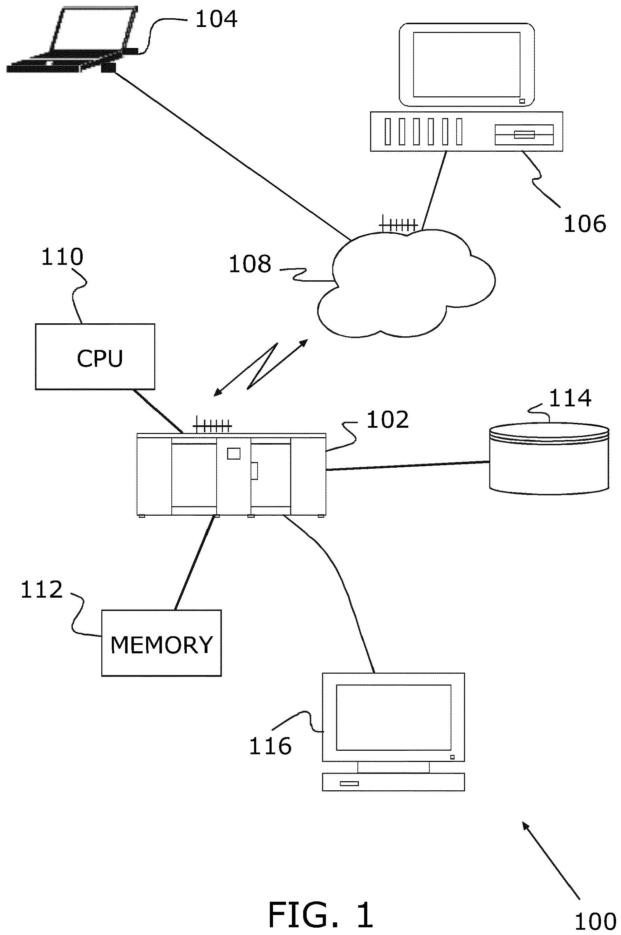

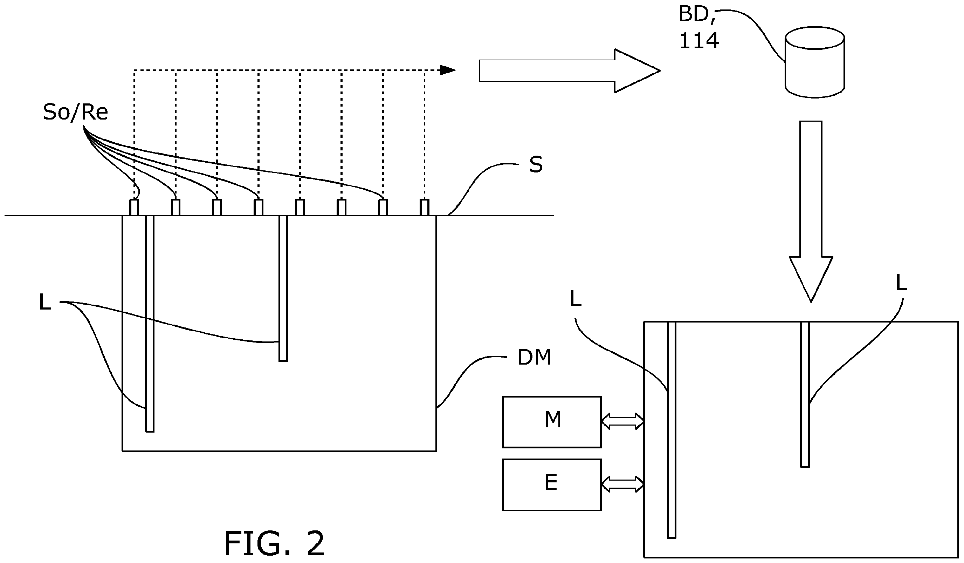

Turning now to the drawings and more particularly, figure 1 and figure 2 show an example of a system (100) for determining a velocity image (I) of a domain (DM) of the subsurface structural geology in an oil and gas reservoir suitable for thrust belt environments, comprising at least: a set of acoustic sources (So) and a set of acoustic receivers (Re) for collecting the acoustic response of the domain (DM), transferring means for sending collected data to a data base (DB, 114), according to a preferred embodiment of the present invention. System (100) also comprises a processing system (102) with one or more CPU units (110) and memory (112) resources allowing to execute a computer program according to any of the embodiments of the invention.

Said processing system (102) may also store data and execute computer programs in a cloud (108) being in data communication with other external computing systems (104, 106, 116) by means of a data network.

An acoustic survey is carried out by deploying the set of acoustic sources (So) and the set of receivers (Re) over the upper surface (S) of the domain (DM), providing the acoustic excitation over the domain (DM) and collecting the response in the form of acoustic amplitudes recorded in time.

Acoustic data comprises acoustic excitation information and the registered acoustic response of the domain (DM). Additionally, acoustic data also comprises the location of each acoustic source (So) and the location of each receiver (Re) for determining the correct location in the domain.

Acoustic data is sent to the data base (DB, 114) in order to be available to the processing system (102) that will use it for generating the velocity image (I) representing a velocity model of the domain (DM).

Figure 2 shows at the left side the domain (DM) limited in the upper boundary by the surface (S) of the earth. In this upper boundary, the acoustic sources (So) and receivers (Re) are graphically represented as being equally distributed; however, a different distribution may be used wherein their locations are provided to the acoustic data information.

Within the domain, two boreholes (L) are represented, a first borehole (L) located at the left side of the domain (DM) and a second borehole (L), shorter than the first borehole (L), located near to the center.

When drilling the boreholes (L) rock properties are measured along with other information collected by means of sensors located in the drilling tool. Rock properties, pressure conditions and water content among other properties allow determining the velocity of propagation along the space of the borehole (L).

In the right hand side of figure 2 there is a schematic representation of a database (BD, 114) with the acoustic data and it is shown an image (I) intended for being a velocity model of the domain (DM).

Over this image (I) there are two regions also identified with letter "L" as said regions are pixel/voxel regions corresponding to two regions where pixels/voxels are hard data; that is, a set of pixels or locations of the domain wherein the velocity values are deemed to be correct or comprising known information.

Since the pixel/voxel values are deemed to be correct and are located also in the correct position within the image (I); said values will not be modified during any further iterative process; specifically during the migration method.

Figure 2 also shows two modules acting over the velocity image (I): a Pre-Stack Depth migration module (M) and an error estimation module (E).

The Pre-Stack Depth migration module (M) is a module that, when being implemented in a processing system (102) carries out one or more migration iterations correcting each pixel/voxel value of the image (I) with an specific correction value.

According to an embodiment, the Pre-Stack Depth migration module (M) computes the correction for all pixels/voxels of the velocity image (I) except those comprised within the region deemed as having a known velocity value.

Along the disclosed iterative method, the set of pixels/voxels of the velocity image (I) corresponding to locations of the domain wherein the velocity field is considered as being correct or known information will be denoted as the set (R).

Before applying the iterative method according to the preferred embodiment of the invention, the set (R) of pixels/voxel of the velocity image (I) with values considered as being correct or known information is limited to those obtained by hard data. In this example, this initial set (R) only comprises pixels/voxels identifying the location of the two boreholes (L).

When the iterative method progresses then the set (R) will be expanded.

A second module, the error estimator module (E), is a module that, when being implemented in a processing system (102) provides information about the error estimation for each pixel/voxel of the velocity image (I). When the error estimation evaluated in a certain pixel/voxel of the image (I) is estimated with a value under a predetermined threshold value, then the iterative method may deem that said pixel/voxel might be included into the set (R) as a pixel/voxel where the velocity value is considered as being correct.

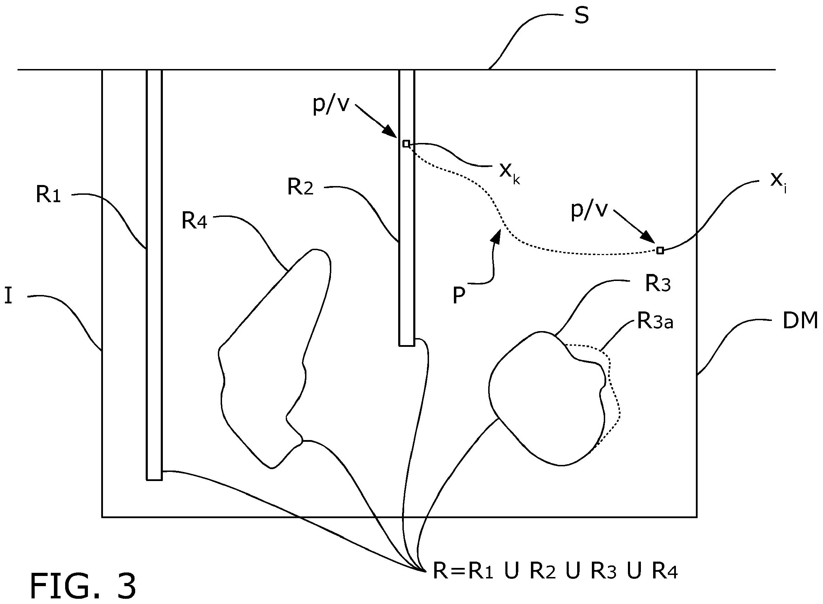

Figure 3 shows a schematic representation of the iterative method being applied to the exemplary embodiment.

An initial velocity image (I) is generated wherein the velocity field values of the locations corresponding to the boreholes are set in the image. The rest of values of the image (I) may be estimated for reducing the number of iterations of the iterative method. If said estimation is not possible, an initial velocity field is chosen such as a constant velocity value deeming that a convergent iterative method reaches the solution independently of the initial velocity image (I).

In this embodiment, the pixels/voxels represent the velocity of propagation in a discretization of the domain (DM).

The iterative method carries out a number of iterations until convergence over the velocity image (I); specifically combining:

- one or more iterations using the Pre-Stack Depth Migration module (M) iterating on the velocity image (I);
- determining the set (R) of pixels/voxels of the velocity image (I) considered as being correct or known information;
- populating the values of the pixels/voxels not being in the set (R) from the values of the pixels/voxels being in the set (R), being said populating step dependent on the values of stacked acoustic amplitudes in the domain (DM).

According to an embodiment, the Pre-Stack Depth Migration module (M) iterates on the whole velocity image (I). In this case, the solution obtained after convergence is the one obtained in the prior art by only using a migration iterative process but, being speeded up by the interpolation process that rapidly propagates the velocity values to the rest of the domain at the right location.

According to an alternative embodiment, the Pre-Stack Depth Migration module (M) iterates on a limited region of the velocity image (I); that region that is not identified as the set (R) speeding up the iterative process even more.

After migrating the velocity image (I), a predetermined number N of iterations with the Pre-Stack Depth Migration module (M) and determining the set (R) of pixels/voxels of the velocity image (I) corresponding to locations of the domain wherein the velocity is considered as being correct or known information, those pixels/voxels not being in the set (R) are populated from the values of the pixels/voxels being in the set (R) wherein said interpolation process depends on the values of stacked acoustic amplitudes in the domain.

According to a preferred embodiment, for each pixel/voxel $x_i$ of the velocity image (I) not being in the set (R), the value of the velocity of said pixel/voxel $x_i$ is set as the value of the velocity of a pixel/voxel $x_k$ of the set (R) satisfying that the travel time of an acoustic wave from $x_i$ to $x_k$ is minimum for all pixels/voxels $x_k$ of the set (R). This constraint requires for each pixel/voxel $x_i$ of the velocity image (I) not being in the set (R) to sweep all pixels/voxels being in the set (R) in order to determine the one whose value will be transferred to the pixel/voxel $x_i$ of the image (I).

In this embodiment the populating process depends also on the stacked acoustic amplitudes located in the coordinates of the pixels/voxels, specifically those with the location not being in the set (R) because the travel time of an acoustic wave from $x_i$ to $x_k$ must be determined by using information of the geological structure taken from the stacked acoustic amplitudes along parts of the path that are located out of the set (R).

In this case, each pixel/voxel $x_k$ of the set (R) must be connected with the pixel/voxel $x_i$ located in a region not being part of the set (R) by means of a path (P), the path (P) defining the shorter path (P) of the acoustic wave traveling between $x_i$ and $x_k$. Then the pixel $x_k$ and the shorter travel time of an acoustic wave from $x_i$ to $x_k$ determines the value of the pixel/voxel $x_i$.

According to an embodiment, the condition of satisfying that the travel time of an acoustic wave from $x_i$ to $x_k$ is minimum for all pixels/voxels $x_k$ of the set (R) is determined as follows:

- let be $R$ the set of pixels/voxels of the velocity image (I) corresponding to locations $x_k$ of the domain wherein the velocity $v_k$ value is considered as being correct;
- solving the equation for $t(x)$, wherein the solution corresponds to the minimum travel time from $x_i$ to the resulting nearest sample point $x_k$ of $R$ among all paths between $x_i$ and points $x \in R$:

$$\nabla t(x) D(x) \nabla t(x) = 1 \text{ if } x \notin R$$

$$t(x) = 0 \text{ if } x \in R$$

wherein $D(x)$ is the diffusion tensor matrix defined as $D_{ij} = a_{i,j}\, a_{j,i}$ wherein "$a_{i,j}$" denotes derivative of $a_i$ with respect to coordinate $j$; being $a$ the stacked acoustic amplitude at the location of the pixel/voxel where $D(x)$ is being evaluated and then, solving the equation

$$v_{new}(x) - \frac{1}{e}\nabla t^2(x) D(x) \nabla v_{new}(x) = v_{old}(x)$$

being $v_{old}(x)$ the velocity taken from the velocity image (I) in the former iteration, $e \geq 2$ a pre-determined constant value and $v_{new}(x)$ is the velocity with the propagated values providing the velocity image (I) for the new iteration.

Function $t(x)$ is solved in the velocity image domain (DM) for those pixels/voxels not being in the set (R) since the value of $t(x)$ in the set (R) is zero. Once function $t(x)$ is determined then the equation $v_{new}(x) - \frac{1}{e}\nabla t^2(x) D(x) \nabla v_{new}(x) = v_{old}(x)$ is solved being $t(x)$ known and also the velocity $v_{old}(x)$ is taken from the velocity image (I) in the previous iteration. The equation is solved for $v_{new}(x)$, the velocity image (I) in the next iteration.

During the iterative process, the error estimation may be estimated by the error estimator module (E) when migrating the velocity image (I). Specifically, the error estimator module (E) determines the error by measuring the distance between the unity value 1 and the gamma value

$$\gamma = \frac{v}{c}$$

being $v$ the velocity computed by Pre-Stack Depth Migration module (M) and c the media velocity along the path (P) between the seismic source and the receiver.

Once the velocity image (I) has been determined populating values for those regions where the velocity value is not deemed as known; that is, not in the set (R), a new iteration is applied until convergence. Before applying again a new iteration, the set (R) of pixels/voxels corresponding to locations of the domain wherein the velocity field is considered as being correct or known is newly defined as those wherein $\|\gamma - 1\| < \varepsilon$ for a predetermined threshold value $\varepsilon > 0$.

Figure 3 shows four disconnected regions comprising pixels/voxels defining the set (R), specifically region $R_1$ comprising pixels/voxels of the first borehole (L) with hard data, region $R_2$ comprising pixels/voxels of the second borehole (L) with hard data, and regions $R_3$ and $R_4$ wherein $\|\gamma - 1\|$ has been calculated as being less than the predetermined threshold value $\varepsilon$.

After certain iterations, some additional set of pixels/voxels (R3a) not being in the set (R) fulfil that $\|\gamma - 1\| < \varepsilon$ and then said pixels/voxels are added to region $R_3$. The added new set of pixels/voxels now fulfilling that $\|\gamma - 1\| < \varepsilon$ are represented by a dashed line.

The set of pixels/voxels of the set (R) are determined as $R=R_1 \cup R_2 \cup R_3 \cup R_4$.

This process expands the area of the set (R) reducing progressively the computational cost of the iterative Pre-Stack Depth Migration when such iterative step is carried out only in those locations corresponding to pixels/voxels not being in set (R). In this specific case, the Pre-Stack Depth Migration module (M) is configured to carry out the migration only on those locations corresponding to pixels/voxels not being in set (R).

After convergence, the set (R) is the whole velocity image (I) as all pixels/voxels are deemed as being correct values.

Efficiency of the method is superior compared with conventional tomographic approach computed on migrated prestack data just by the fact that it avoids tomography iteration on pre stack gathers for velocity model update. As a result, said methods disclosed in the prior art require a number of iterations that is at least one order of magnitude larger than the present invention to converge to a reasonable model.

**Claims**

1. Computer implemented-method for determining a velocity image (I) of a domain (DM) of the subsurface structural geology in an oil and gas reservoir suitable for thrust belt environments, the method comprising:

   - inputting surface seismic data (BD) of an acoustic survey retrieved from the domain (DM) which comprises stacked acoustic amplitudes and the locations of acoustic source and the receivers (So, Re);
   - inputting an initial velocity field estimation on the domain (DM) and generating a velocity image (I) by a Pre-Stack Depth migration process, the velocity image (I) comprising pixels/voxels (p/v), wherein said pixels/voxels (p/v) represent the velocity in a discretization of the domain (DM);
   - inputting velocity information at one or more locations of the domain considered as correct information or known information;
   - defining a Pre-Stack Depth Migration module (M) configured to iterate a predetermined number of iterations on a velocity image (I) providing in each iteration a new velocity image (I) with a correction of the velocity of the image;
   - defining an error estimator module (E) adapted to provide an error estimation of a velocity image (I);
   wherein the method iteratively carries out the following steps:

      a) executing the Pre-Stack Depth Migration module (M) iterating on the whole velocity image (I) a predetermined number $N$ of iterations;
      b) determining a set ($R$) of pixels/voxels (p/v) of the velocity image (I) corresponding to locations of the domain wherein the velocity field is considered as being correct or known information;
      c) populating values of the pixels/voxels (p/v) not being in the set (R) from the values of the pixels/voxels being in the set ($R$), being said populating step dependent on the values of stacked acoustic amplitudes in the domain (DM);

   until the error estimator module (E) determines an error on the velocity image (I) under a pre-determined threshold value.

2. A method according to claim 1, wherein the populating step c) comprises the step: for each pixel/voxel $x_i$ of the velocity image (I) not being in the set (R), the value of the velocity of said pixel/voxel $x_i$ is set as the value of the velocity of a pixel/voxel $x_k$ of the set (R) satisfying that the travel time of an acoustic wave from $x_i$ to $x_k$ is minimum for all pixels/voxels $x_k$ of the set (R).

3. A method according to claim 2, wherein the condition of satisfying that the travel time of an acoustic wave from $x_i$ to $x_k$ is minimum for all pixels/voxels $x_k$ of the set (R) is determined as simulating the propagation of waves from $x_i$ to $x_k$ along a path satisfying that said path is parallel to the eigen-vector associated to the largest eigen-value of $D(x)$, wherein $D(x)$ is the diffusion tensor matrix defined as $D_{ij} = a_{i,j}\, a_{j,i}$ wherein "$a_{i,j}$" denotes derivative of $a_i$ with respect to coordinate $j$; being $a$ the stacked acoustic amplitude at the location of the pixel/voxel where $D(x)$ is being evaluated.

4. A method according to claim 2 or 3, wherein the condition of satisfying that the travel time of an acoustic wave from $x_i$ to $x_k$ is minimum for all pixels/voxels $x_k$ of the set (R) is determined as follows:

   - let be R the set of pixels/voxels of the velocity image (I) corresponding to locations $x_k$ of the domain wherein the velocity $v_k$ value is considered as being correct;
   - solving the equation for $t(x)$, wherein the solution corresponds to the minimum travel time from $x_i$ to the resulting nearest sample point $x_k$ of R among all paths between $x_i$ and points $x \in R$:

   $$\nabla t(x) D(x) \nabla t(x) = 1 \text{ if } x \notin R$$

   $$t(x) = 0 \text{ if } x \in R$$

   wherein $D(x)$ is the diffusion tensor matrix defined as $D_{ij} = a_{i,j} a_{j,i}$ wherein "$a_{i,j}$" denotes derivative of $a_i$ with respect to coordinate $j$; being $a$ the stacked acoustic amplitude at the location of the pixel/voxel where $D(x)$ is being evaluated and then, solving the equation

   $$v_{new}(x) - \frac{1}{e} \nabla t^2(x) D(x) \nabla v_{new}(x) = v_{old}(x)$$

   being $v_{old}(x)$ the velocity taken from the velocity image (I) in the former iteration, $e \geq 2$ a pre-determined constant value and $v_{new}(x)$ is the interpolated velocity providing the velocity image (I) for the new iteration.

5. A method according to any of previous claims, wherein the error estimator module (E) determines the error by measuring the distance between the unity value 1 and the gamma value

   $$\gamma = \frac{v}{c}$$

   being $v$ the velocity computed by Pre-Stack Depth Migration module and c the media velocity along the path (P) between the seismic source and the receiver.

6. A method according to any of previous claims, wherein the set (R) of pixels/voxels of the velocity image (I) corresponding to locations of the domain wherein the velocity field is considered as being correct or known are those wherein $\|\gamma - 1\| < \varepsilon$ for a predetermined threshold value $\varepsilon > 0$.

7. A method according to any of previous claims, wherein the set of pixels/voxels corresponding to those regions where the velocity image has been calculated according to step a), step b) or both and wherein the error estimator module determines that the velocity is under a pre-determined threshold value are merged into the set R of pixels/voxels.

8. A method according to any of previous claims, wherein the inputted initial velocity image (I) is generated as:

   - a velocity image(I) wherein all pixel/voxel values are constant with a predetermined velocity value or;

- a velocity image (I) with known data in certain pixel/voxel locations and the rest of the image without known data, said pixels/voxels without known data being interpolated from known data or;
- a velocity image (I) according to a) or b) being iterated a pre-determined number of iterations by the Pre-Stack Depth Migration module (M).

9. A method according to any of previous claims, wherein the Pre-Stack Depth Migration module (M) is configured to iterate a predetermined number of iterations on a region of the velocity image (I) limited to those pixels/voxels that are not in the set (R).

10. A computer program product comprising instructions which, when the program is executed by a computer, cause the computer to carry out a method according to any of claims 1 to 9.

11. A computer system adapted to carry out a method according to any of claims 1 to 9.

FIG. 1

FIG. 2

EP 3 859 405 A1

FIG. 3

EP 3 859 405 A1

Europäisches
Patentamt

European
Patent Office

Office européen
des brevets

# EUROPEAN SEARCH REPORT

**Application Number**

EP 20 38 2049

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/065209 A2 (CHEVRON USA INC [US]; SUN YONGHE [US] ET AL.) 10 June 2010 (2010-06-10) | 1,2,5-11 | INV. G01V1/30 |
| A | * paragraph [0002] - paragraph [0034]; figure 2 * | 3,4 | |
| A | WO 2018/158378 A1 (REPSOL EXPLORACION S A [ES]) 7 September 2018 (2018-09-07) * page 1 - page 23; figure 2 * | 1 | |
| A | US 2010/074053 A1 (JAISWAL PRIYANK [US] ET AL) 25 March 2010 (2010-03-25) * paragraphs [0009] - [0013], [0042], [0084], [0085] * | 1 | |

TECHNICAL FIELDS
SEARCHED      (IPC)

G01V

The present search report has been drawn up for all claims

| Place of search | Date of completion of the search | Examiner |
|---|---|---|
| The Hague | 16 July 2020 | Gassmann, Martin |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

                                      

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 20 38 2049

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2020

| Patent document cited in search report | | | Publication date | Patent family member(s) | | | Publication date |
|---|---|---|---|---|---|---|---|
| WO 2010065209 | A2 | | 10-06-2010 | AU | 2009322868 | A1 | 10-06-2010 |
| | | | | BR | PI0922702 | A2 | 05-01-2016 |
| | | | | CA | 2745076 | A1 | 10-06-2010 |
| | | | | CN | 102239429 | A | 09-11-2011 |
| | | | | EA | 201170747 | A1 | 30-12-2011 |
| | | | | EP | 2370924 | A2 | 05-10-2011 |
| | | | | SG | 171913 | A1 | 28-07-2011 |
| | | | | US | 2010135115 | A1 | 03-06-2010 |
| | | | | US | 2012185171 | A1 | 19-07-2012 |
| | | | | WO | 2010065209 | A2 | 10-06-2010 |
| WO 2018158378 | A1 | | 07-09-2018 | BR | 112019018222 | A2 | 16-06-2020 |
| | | | | EP | 3589985 | A1 | 08-01-2020 |
| | | | | US | 2020049844 | A1 | 13-02-2020 |
| | | | | WO | 2018158378 | A1 | 07-09-2018 |
| US 2010074053 | A1 | | 25-03-2010 | NONE | | | |

EPO FORM P0459

For more details about this annex : see Official Journal of the European Patent Office, No. 12/82